# EUROPEAN PATENT APPLICATION

(11) **EP 4 718 665 A1**
(43) Date of publication of application: **01.04.2026**
(21) Application number: 23939133.7
(22) Date of filing: 04.08.2023
(51) Int. Cl.: H02J 7/00, B60L 58/10

(54) **BATTERY MAIN CONTROL UNIT, CHARGING AND DISCHARGING CIRCUIT, AND ELECTRIC DEVICE**

(30) Priority: 29.05.2023 CN 202321327959 U
(71) Applicant: Contemporary Amperex Technology Co., Limited, Ningde, Fujian 352100 (CN)
(72) Inventor: WU, Kai, Ningde, Fujian 352100 (CN); HUANG, Xiaojian, Ningde, Fujian 352100 (CN); LIU, Diping, Ningde, Fujian 352100 (CN); YAN, Yu, Ningde, Fujian 352100 (CN)
(74) Representative: Ziebig Hengelhaupt Intellectual Property Attorneys Patentanwaltskanzlei PartGmbB
(86) International application number: PCT/CN2023/111274
(87) International publication number: WO 2024/244153

(57) **Abstract**

The present application discloses a battery main box, a charge-discharge circuit, and a powered device. The battery main box includes two first electrode circuits and one second electrode circuit. A switch is connected between the two first electrode circuits. The two first electrode circuits are respectively configured to be connected to two powered loads and two batteries, and the second electrode circuit is configured to be respectively connected to the two powered loads and the two batteries. The battery main box in the embodiments of the present application includes the two first electrode circuits and the one second electrode circuit, and the switch is connected between the two first electrode circuits. By controlling the switch to be on or off, the circuit structure in which the batteries are located is changed, so that the circuit structure can be flexibly changed to implement more functions.

## Description

### CROSS-REFERENCE TO RELATED APPLICATIONS

The present application claims priority and benefits to the following patent application, which is incorporated herein by reference in its entirety:

Chinese Patent Application No. 202321327959.7, filed with the China National Intellectual Property Administration on May 29, 2023 and entitled "BATTERY MAIN BOX, CHARGE-DISCHARGE CIRCUIT, AND POWERED DEVICE".

### TECHNICAL FIELD

The present application relates to the technical field of batteries, and in particular to a battery main box, a charge-discharge circuit, and a powered device.

### BACKGROUND

With continuous development of new energy technologies, new energy powered devices such as new energy vehicles and in particular, electric vehicles have widely used a power battery as a power source. The power battery such as a lithium-ion battery has advantages such as high power density, high cycle life, and good environmental protection effect.

A structure in which batteries and a dual-motor architecture are combined is generally used in a new energy vehicle. The dual-motor architecture includes two parallel motors. Electric energy released by the batteries is converted into mechanical energy by the two motors, to drive the new energy vehicle to move. A battery main box is configured to manage and control the batteries. A battery main box in the related art cannot change a circuit structure in which the batteries are located, which leads to a fixed circuit connection manner and cannot flexibly change the circuit structure to implement more functions.

The foregoing statement is merely intended to provide background information related to the present application, and does not necessarily constitute the related art.

### SUMMARY

In view of the foregoing problem that battery main box in the related art cannot change a circuit structure in which the battery is located, which leads to a fixed circuit connection manner and cannot flexibly change the circuit structure to implement more functions, the present application provides a battery main box, a charge-discharge circuit, and a powered device. The battery main box includes two first electrode circuits and one second electrode circuit. A switch is connected between the two first electrode circuits. The two first electrode circuits are respectively configured to be connected to two powered loads and two batteries, and the second electrode circuit is configured to be respectively connected to the two powered loads and the two batteries. By controlling the switch to be on or off, the circuit structure in which the batteries are located is changed, so that the circuit structure can be flexibly changed to implement more functions.

A first aspect of the embodiments of the present application provides a battery main box, including two first electrode circuits and one second electrode circuit.

The two first electrode circuits are respectively a first electrode first circuit and a first electrode second circuit. The first electrode first circuit is configured to be respectively connected to a first powered load and a first electrode of a first battery. The first electrode second circuit is configured to be respectively connected to a second powered load and a first electrode of a second battery. The second electrode circuit is configured to be respectively connected to the first powered load, the second powered load, a second electrode of the first battery, and a second electrode of the second battery. The first electrode is one of a positive electrode and a negative electrode, and the second electrode is the other of the positive electrode and the negative electrode than the first electrode.

A first switch is connected between the first electrode first circuit and the first electrode second circuit.

The battery main box in the embodiments of the present application includes the two first electrode circuits and the one second electrode circuit, and the switch is connected between the two first electrode circuits. By controlling the switch to be on or off, the circuit structure in which the batteries are located is changed, so that the circuit structure can be flexibly changed to implement more functions.

The battery main box in the embodiments of the present application includes the first electrode first circuit, the first electrode second circuit, and the second electrode circuit, and a first switch is connected between a first end of the first electrode first circuit and a first end of the first electrode second circuit. By controlling the first switch to be on or off, the circuit structure in which the batteries are located is changed, so that the circuit structure can be flexibly changed to implement more functions.

In some embodiments of the present application, the battery main box further includes a first connector and a second connector.

The first electrode first circuit is respectively connected to the first connector and the second connector. The first connector is configured to be connected to the first electrode of the first battery, and the second connector is configured to be connected to the first powered load.

By using the first connector, the first electrode of the first battery can be conveniently connected to the battery main box through a wire, thereby improving convenience of wiring between the first battery and the battery main box. By using the second connector, one end of the first powered load can be conveniently connected to the battery main box, thereby improving convenience of wiring between the first powered load and the battery main box.

In some embodiments of the present application, the battery main box further includes a third connector and a fourth connector.

The first electrode second circuit is respectively connected to the third connector and the fourth connector. The third connector is configured to be connected to the first electrode of the second battery, and the fourth connector is configured to be connected to the second powered load.

By using the third connector, the first electrode of the second battery can be conveniently connected to the battery main box through a wire, thereby improving convenience of wiring between the second battery and the battery main box. By using the second connector, one end of the second powered load can be conveniently connected to the battery main box, thereby improving convenience of wiring between the second powered load and the battery main box.

In some embodiments of the present application, the battery main box further includes a fifth connector and a sixth connector.

The second electrode circuit is respectively connected to the fifth connector and the sixth connector. The fifth connector is configured to be connected to the second electrode of the first battery and the second electrode of the second battery, and the sixth connector is configured to be connected to the first powered load and the second powered load.

By using the fifth connector, the second electrode of the first battery and the second electrode of the second battery can be conveniently connected to the battery main box through wires, thereby improving convenience of wiring between the first battery and the second battery, and the battery main box. By using the sixth connector, the other end of the first powered load and the other end of the second powered load can be conveniently connected to the battery main box through wires, thereby improving convenience of wiring between the first powered load and the second powered load, and the battery main box.

In some embodiments of the present application, the first switch is connected between a first end of the first electrode first circuit and a first end of the first electrode second circuit. The fifth connector includes a first sub-connector and a second sub-connector.

The sixth connector includes a third sub-connector and a fourth sub-connector.

The first sub-connector and the second sub-connector are both connected to a first end of the second electrode circuit.

The third sub-connector and the fourth sub-connector are both connected to a second end of the second electrode circuit.

By using the first sub-connector and the second sub-connector, the negative electrode of the first battery and the negative electrode of the second battery can be more conveniently connected to the battery main box, thereby facilitating wiring. By using the third sub-connector and the fourth sub-connector, the wire of the first powered load and the wire of the second powered load can be more conveniently and flexibly connected to the battery main box, thereby facilitating wiring.

In some embodiments of the present application, the first electrode first circuit is provided with a third switch. The first electrode second circuit is provided with a fourth switch. The second electrode circuit is provided with a fifth switch.

By disposing the switches on the circuits, closing or opening of the circuits can be more conveniently controlled by controlling the switches to be on or off, so that the power supply to the circuits can be controlled more flexibly, and the batteries can be disconnected from other components in time when an abnormality occurs in the circuits, thereby protecting the batteries and the circuits together.

In some embodiments of the present application, the first electrode first circuit is provided with a first current sensor connected in series with the third switch.

The current sensor detects a size of a current flowing through the circuit. The detected current helps to determine whether a failure occurs in the circuit, and based on the current, some control processes can be adjusted, etc.

In some embodiments of the present application, the first electrode second circuit is provided with a second current sensor connected in series with the fourth switch.

The current sensor detects a size of a current flowing through the circuit. The detected current helps to determine whether a failure occurs in the circuit, and based on the current, some control processes can be adjusted, etc.

In some embodiments of the present application, the first electrode first circuit is provided with a first precharge circuit connected in parallel with the third switch, and the first electrode second circuit is provided with a second precharge circuit connected in parallel with the fourth switch.

The first precharge circuit and the second precharge circuit can protect the first electrode first circuit and the third switch, thereby avoiding damage to the first electrode first circuit and the third switch caused by an excessive current when a loop is formed at the beginning.

In some embodiments of the present application, the second electrode circuit is provided with a third precharge circuit connected in parallel with the fifth switch.

The third precharge circuit can protect the second electrode circuit and the fifth switch, thereby avoiding damage to the second electrode circuit and the fifth switch caused by an excessive current when a loop is formed at the beginning.

A second aspect of the embodiments of the present application provides a charge-discharge circuit, including a power supply module, a first driving assembly, a second driving assembly, and a sixth switch. The power supply module includes a first battery, a second battery, and the battery main box according to any embodiment of the first aspect. The two first electrode circuits are respectively the first electrode first circuit and the first electrode second circuit.

The first driving assembly is respectively connected to a second end of the first electrode first circuit and the second end of the second electrode circuit. The second driving assembly is respectively connected to a second end of the first electrode second circuit and the second end of the second electrode circuit.

One end of the sixth switch is connected to the first driving assembly, and the other end of the sixth switch is connected to the second driving assembly.

The switching elements in the charge-discharge circuit are automatically controlled, and the switching elements are turned on or off to flexibly switch among different circuit loops, thereby implementing more functions, improving flexibility and fault tolerance of control of the charge-discharge circuit, and increasing functions that can be implemented by the whole circuit architecture.

In some embodiments of the present application, one end of the sixth switch is connected to a neutral point of a motor in the first driving assembly, and the other end of the sixth switch is connected to a neutral point of a motor in the second driving assembly.

The switching elements in the charge-discharge circuit are automatically controlled, and the switching elements are turned on or off to flexibly switch among different circuit loops, thereby implementing more functions, improving flexibility and fault tolerance of control of the charge-discharge circuit, and increasing functions that can be implemented by the whole circuit architecture.

In some embodiments of the present application, the battery main box further includes the first connector and the second connector. The first electrode first circuit is respectively connected to the first connector and the second connector. The first connector is configured to be connected to a first electrode of the first battery, and the second connector is configured to be connected to the first powered load. The battery main box further includes the third connector and the fourth connector. The first electrode second circuit is respectively connected to the third connector and the fourth connector. The third connector is configured to be connected to a first electrode of the second battery, and the fourth connector is configured to be connected to the second powered load. The battery main box further includes the fifth connector and the sixth connector. The second electrode circuit is respectively connected to the fifth connector and the sixth connector. The fifth connector is configured to be connected to a second electrode of the first battery and a second electrode of the second battery, and the sixth connector is configured to be connected to the first powered load and the second powered load. The first driving assembly is respectively connected to the second connector and the sixth connector. The second driving assembly is respectively connected to the fourth connector and the sixth connector.

In some embodiments of the present application, a first neutral terminal is disposed at the neutral point of the motor in the first driving assembly, and a second neutral terminal is disposed at the neutral point of the motor in the second driving assembly.

One end of the sixth switch is connected to the first neutral terminal through a high-voltage wire harness, and the other end of the sixth switch is connected to the second neutral terminal through a high-voltage wire harness.

In this way, the sixth switch can be conveniently connected between the neutral point of the motor in the first driving assembly and the neutral point of the motor in the second driving assembly through a wire. During connection, there is no need to disassemble a housing of the motor in the first driving assembly and a housing of the motor in the second driving assembly to find locations of the neutral points, thereby improving connection convenience and connection efficiency.

In some embodiments of the present application, the charge-discharge circuit further includes an energy storage element.

The energy storage element is connected to a circuit between the neutral point of the motor in the first driving assembly and the neutral point of the motor in the second driving assembly, and the energy storage element is connected in series with the sixth switch.

By adding the energy storage element, in a scenario of heating the batteries, the energy storage element stores electric energy together with windings in the motor in the first driving assembly and in the motor in the second driving assembly, which can increase stored energy of the whole circuit system, and then, the stored electric energy is charged back to the batteries. Charge and discharge are carried out alternately to heat the batteries. By using the energy storage element, a size of an alternating current generated in the whole loop can be increased, heat generation from internal resistance of the batteries per unit time is increased, and a heating rate of the batteries is increased.

In some embodiments of the present application, the energy storage element includes at least one inductor.

The at least one inductor and the sixth switch are connected in series to the circuit between the neutral point of the motor in the first driving assembly and the neutral point of the motor in the second driving assembly.

The at least one inductor is connected in series between the neutral points of the first motor and the second motor. By using the inductor connected in series, a total inductance of the inductor in the whole circuit system in the scenario of heating the batteries can be increased, which helps to increase the size of the alternating current generated in the charge-discharge loop and improve heating efficiency of the batteries.

A third aspect of the embodiments of the present application provides a powered device, including a control apparatus and the charge-discharge circuit according to any embodiment of the second aspect.

The control apparatus is in communication connection with switching elements in the charge-discharge circuit, and the switch elements include at least the first switch and the sixth switch.

The switching elements in the charge-discharge circuit are automatically controlled by the control apparatus, and the switching elements are turned on or off to flexibly switch among different circuit loops, thereby implementing more functions, improving flexibility and fault tolerance of control of the charge-discharge circuit, increasing functions that can be implemented by the whole circuit architecture, and improving performance of the powered device.

The above description only refers to an overview of the technical solution of the embodiments of the present application. In order to understand the technical means of the embodiments of the present application more clearly, it can be implemented according to the content of the description. In order to make the above-mentioned and other purposes, features and advantages of the embodiments of the present application more apparent, the specific implementations of the present application are listed below.

### BRIEF DESCRIPTION OF THE DRAWINGS

Various other advantages and benefits will become apparent to those of ordinary skill in the art upon reading the detailed description of the following implementations. The accompanying drawings are merely used for illustrating the implementations of the present application and are not considered as a limitation of the present application. In addition, in all the accompanying drawings, same parts are indicated by the same reference numerals.
FIG. 1 is a schematic diagram of a structure of a vehicle according to one or more embodiments;
FIG. 2 is a schematic diagram of a structure of a battery main box according to one or more embodiments;
FIG. 3 is a schematic diagram of a structure of the battery main box according to one or more embodiments;
FIG. 4 is a schematic diagram of a structure of the battery main box according to one or more embodiments;
FIG. 5 is a schematic diagram of a structure of the battery main box according to one or more embodiments;
FIG. 6 is a schematic diagram of a structure of the battery main box according to one or more embodiments;
FIG. 7 is a schematic diagram of a structure of the battery main box according to one or more embodiments;
FIG. 8 is a schematic diagram of a structure of the battery main box according to one or more embodiments;
FIG. 9 is a schematic diagram of a structure of a charge-discharge circuit according to one or more embodiments;
FIG. 10 is a schematic diagram of a structure of the charge-discharge circuit according to one or more embodiments;
FIG. 11 is a schematic diagram of a structure of the charge-discharge circuit according to one or more embodiments;
FIG. 12 is a schematic diagram of a structure of the charge-discharge circuit according to one or more embodiments;
FIG. 13 is a schematic diagram of a structure of the charge-discharge circuit according to one or more embodiments; and
FIG. 14 is a schematic diagram of a structure of a powered device according to one or more embodiments.

Reference numerals in the accompanying drawings:
1000: vehicle, 100: battery, 200: controller, 300: motor, and 400: charge-discharge circuit;
1: battery main box, 2: first electrode first circuit, 3: first electrode second circuit, 4: second electrode circuit; 5: first switch, 6: first connector, 7: second connector, 8: third connector; 9: fourth connector, 10: fifth connector, 11: sixth connector, 15: fifth switch; 16: first current sensor, 17: second current sensor, 18: first precharge circuit, 19: second precharge circuit, 20: third precharge circuit, 21: first battery, 22: second battery, 23: first driving assembly, 24: second driving assembly, 25: sixth switch, 26: first neutral terminal, 27: second neutral terminal, and 30: control apparatus; and
101: first sub-connector, 102: second sub-connector, 111: third sub-connector, 112: fourth sub-connector, 231: first motor controller, 232: first motor, 241: second motor controller, and 242: second motor.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, all technical and scientific terms used herein have the same meaning as commonly understood by those skilled in the technical filed to which the present application belongs. The terminology used herein is for the purpose of describing particular embodiments only and is not intended to limit the present application. The terms "comprise" and "have" and any variations thereof in the description and claims of the present application and the above brief description of the drawings are intended to cover non-exclusive inclusions.

In the description according to the embodiments of the present application, the technical terms "first", "second", and the like are only used to distinguish different objects, and should not be understood as indicating or implying relative importance or implying the number, specific order or primary and secondary relationship of indicated technical features. In the description according to the embodiments of the present application, "a plurality of" means two or more, unless otherwise expressly and specifically defined.

"Embodiment" mentioned herein means that particular features, structures, or characteristics described with reference to the embodiment may be included in at least one embodiment of the present application. The appearances of the phrase in various places in the description are not necessarily all referring to the same embodiment, nor a separate or alternative embodiment that is mutually exclusive of other embodiments. A person skilled in the art explicitly or implicitly understands that the embodiments described herein may be combined with other embodiments.

In the description according to the embodiments of the present application, the term "and/or" is merely an association to describe the associated objects. It can mean that there are three kinds of relationships, such as A and/or B, which means that A exists alone, A and B exist at the same time, and B exists alone. In addition, the character "/" herein generally indicates an "or" relationship between the associated objects.

In the description according to the embodiments of the present application, the term "a plurality of' means two or more (including two). Similarly, "a plurality of groups" means two or more groups (including two groups), and "a plurality of pieces" means two or more pieces (including two pieces).

In the description according to the embodiments of the present application, the orientations or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" based on the accompanying drawings, are only for the convenience of describing the embodiments of the present application and simplifying the description, rather than indicating or implying that the involved apparatus or element should have a specific orientation or should be configured or operated in the specific orientation, and therefore, they cannot be understood as limiting the embodiments of the present application.

In the description according to the embodiments of the present application, unless otherwise expressly specified and defined, the technical terms "installed", "connected to", "connected with", "fixed", or the like should be interpreted in a broad sense. For example, a connection may refer to a fixed connection, a detachable connection or an integral connection; or may refer to a mechanical connection or an electrical connector; or may refer to a direct connection or an indirect connection through an intermediate medium; or may refer to an internal communication between the two elements or the interaction relationship between the two elements. For those of ordinary skill in the art, the specific meanings of the above terms in the embodiments of the present application may be interpreted according to specific situations.

With continuous development of new energy technologies, new energy powered devices such as new energy vehicles and in particular, electric vehicles have widely used a power battery as a power source.

A structure in which batteries and a dual-motor architecture are combined is generally used in a new energy powered device. The dual-motor architecture includes two parallel motors. Electric energy released by the batteries is converted into mechanical energy by the two motors, to drive the new energy vehicle to move. A battery main box is configured to manage and control the batteries. A battery main box in the related art cannot change a circuit structure in which the batteries are located, which leads to a fixed circuit connection manner and cannot flexibly change the circuit structure to implement more functions.

In view of the problem in related art, the embodiments of the present application provide a battery main box, including two first electrode circuits and one second electrode circuit. A switch is connected between the two first electrode circuits. The two first electrode circuits are respectively configured to be connected to two powered loads and two batteries, and the second electrode circuit is configured to be respectively connected to the two powered loads and the two batteries. The battery main box in the embodiments of the present application includes the two first electrode circuits and the one second electrode circuit, and the switch is connected between the two first electrode circuits. By controlling the switch to be on or off, the circuit structure in which the batteries are located is changed, so that the circuit structure can be flexibly changed to implement more functions.

The battery in the embodiments of the present application may include a battery cell, a battery module, and a battery pack. The embodiments of the present application do not limit the size of the battery. The battery may be a power battery, such as a lithium battery, a lead-acid battery, a nickel-cadmium battery, and a sodium-sulfur battery.

The embodiments of the present application further provide a charge-discharge circuit, including a power supply module, a first driving assembly, a second driving assembly, and a sixth switch. The power supply module includes a first battery, a second battery, and the battery main box described above. The two first electrode circuits are respectively the first electrode first circuit and the first electrode second circuit. The first driving assembly is respectively connected to a second end of the first electrode first circuit and the second end of the second electrode circuit. The second driving assembly is respectively connected to a second end of the first electrode second circuit and the second end of the second electrode circuit. One end of the sixth switch is connected to the first driving assembly, and the other end of the sixth switch is connected to the second driving assembly.

According to the charge-discharge circuit in the embodiments of the present application, the switching elements in the charge-discharge circuit are automatically controlled, and the switching elements are turned on or off to flexibly switch among different circuit loops, thereby implementing more functions, improving flexibility and fault tolerance of control of the charge-discharge circuit, and increasing functions that can be implemented by the whole circuit architecture.

The embodiments of the present application further provide a powered device using the charge-discharge circuit described above. The powered device may be, but not limited to, an electric toy, an electric tool, an electric bicycle, an electric vehicle, a ship, a spacecraft, or the like. The powered device uses and has the charge-discharge circuit disclosed in the present application. In this way, the switching elements in the charge-discharge circuit can be automatically controlled based on requirements, and the switching elements are turned on or off to flexibly switch among different circuit loops, thereby implementing more functions, improving flexibility and fault tolerance of control of the charge-discharge circuit, and increasing functions that can be implemented by the whole circuit architecture. By means of flexible switching, the charge-discharge circuit forms different circuit loops, thereby implementing different functions.

For ease of description, the following embodiments will be described by using an example in which a powered device according to an embodiment of the present application is a vehicle 1000.

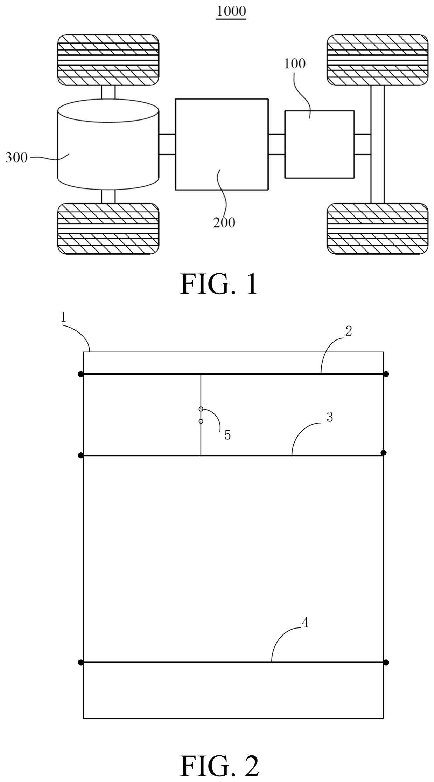

Referring to FIG. 1, FIG. 1 is a schematic diagram of a structure of a vehicle 1000 according to some embodiments of the present application. The vehicle 1000 may be a new energy vehicle. The new energy vehicle may be a pure electric vehicle or an extended range vehicle, etc. The inner part of the vehicle 1000 is provided with a battery 100. The battery 100 may be arranged at the bottom, head, or tail of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation, and traveling of the vehicle 1000.

The battery 100 may also be used as a power supply for driving the vehicle 1000 to provide driving power for the vehicle 1000. The motor 300 converts electric energy outputted by the battery 100 into mechanical energy, to drive the vehicle 1000 to move.

In an actual application, a number of the motors 300 may be 1, 2 or the like. The charge-discharge circuit provided in the embodiments of the present application is applicable to a case in which the vehicle 1000 has two batteries 100 and two motors 300.

In some embodiments of the present application, referring to FIG. 2, FIG. 2 shows a battery main box 1. The battery main box 1 includes two first electrode circuits and one second electrode circuit 4. The two first electrode circuits are respectively a first electrode first circuit 2 and a first electrode second circuit 3. A first switch 5 is connected between the two first electrode circuits. The two first electrode circuits are respectively configured to be connected to two powered loads and two batteries. The second electrode circuit 4 is configured to be respectively connected to the two powered loads and the two batteries.

The battery main box 1 in the embodiments of the present application includes the two first electrode circuits and the one second electrode circuit, and the switch is connected between the two first electrode circuits. By controlling the switch to be on or off, the circuit structure in which the batteries are located is changed, so that the circuit structure can be flexibly changed to implement more functions.

Specifically, in some examples, referring to FIG. 2, the battery main box 1 includes a first electrode first circuit 2, a first electrode second circuit 3, and a second electrode circuit 4. The first electrode first circuit 2 is configured to be respectively connected to a first powered load and a first electrode of a first battery 21. The first electrode second circuit 3 is configured to be respectively connected to a second powered load and a first electrode of a second battery 22. The second electrode circuit 4 is configured to be respectively connected to the first powered load, the second powered load, a second electrode of the first battery 21, and a second electrode of the second battery 22. The first electrode is one of a positive electrode and a negative electrode, and the second electrode is the other of the positive electrode and the negative electrode than the first electrode. A first switch 5 is connected between a first end of the first electrode first circuit 2 and a first end of the first electrode second circuit 3.

In a specific example, the first electrode is a positive electrode, and the second electrode is a negative electrode. The first electrode first circuit 2 is connected to the positive electrode of the first battery 21. The first electrode second circuit 3 is connected to the positive electrode of the second battery 22. The second electrode circuit 4 is connected to the negative electrode of the first battery 21 and the negative electrode of the second battery 22.

In a specific example, the first electrode is a negative electrode, and the second electrode is a positive electrode. The first electrode first circuit 2 is connected to the negative electrode of the first battery 21. The first electrode second circuit 3 is connected to the negative electrode of the second battery 22. The second electrode circuit 4 is connected to the positive electrode of the first battery 21 and the positive electrode of the second battery 22.

The first powered load may be, for example, one of the motors in the dual-motor architecture, and the second powered load may be, for example, the other motor in the dual-motor architecture.

According to the battery main box 1, by controlling the first switch 5 to be on or off, the circuit structure in which the batteries are located can be changed, so that the circuit structure can be flexibly changed to implement more functions, thereby greatly alleviating the situation in the related art that the battery main box cannot change the circuit structure in which the batteries are located, which leads to a fixed circuit connection manner and cannot flexibly change the circuit structure to implement more functions.

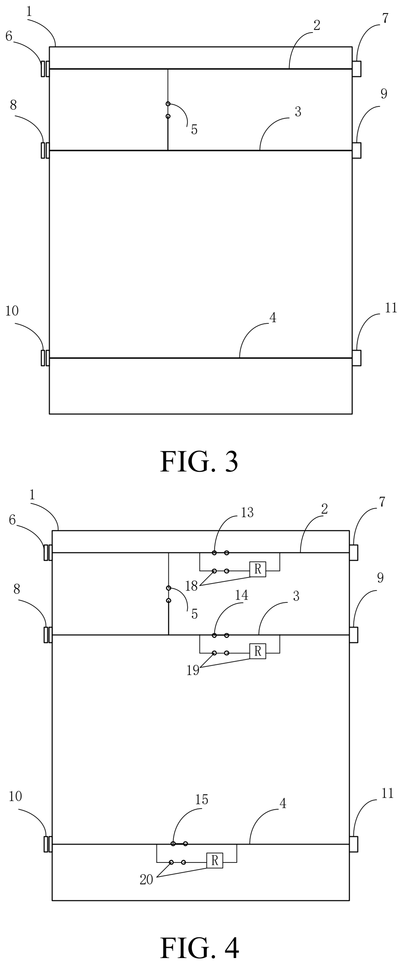

In some embodiments of the present application, referring to FIG. 3, the battery main box 1 further includes a first connector 6 and a second connector 7. The first electrode first circuit 2 is respectively connected to the first connector 6 and the second connector 7. The first connector 6 is configured to be connected to the first electrode of the first battery 21, and the second connector 7 is configured to be connected to the first powered load.

By using the first connector 6, the first electrode of the first battery 21 can be conveniently connected to the battery main box 1 through a wire, thereby improving convenience of wiring between each battery and the battery main box 1. By using the second connector 7, one end of the first powered load can be conveniently connected to the battery main box 1, thereby improving convenience of wiring between the first powered load and the battery main box.

The battery main box 1 further includes a third connector 8 and a fourth connector 9. The first electrode second circuit 3 is respectively connected to the third connector 8 and the fourth connector 9. The third connector 8 is configured to be connected to the first electrode of the second battery 22, and the fourth connector 9 is configured to be connected to the second powered load.

By using the third connector 8, the first electrode of the second battery 22 can be conveniently connected to the battery main box 1 through a wire, thereby improving convenience of wiring between the second battery 22 and the battery main box 1. By using the fourth connector 9, one end of the second powered load can be conveniently connected to the battery main box 1, thereby improving convenience of wiring between the second powered load and the battery main box 1.

The battery main box 1 further includes a fifth connector 10 and a sixth connector 11. The second electrode circuit 4 is respectively connected to the fifth connector 10 and the sixth connector 11. The fifth connector 10 is configured to be connected to the second electrode of the first battery 21 and the second electrode of the second battery 22, and the sixth connector 11 is configured to be connected to the first powered load and the second powered load.

By using the fifth connector 10, the second electrode of the first battery 21 and the second electrode of the second battery 22 can be conveniently connected to the battery main box 1 through wires, thereby improving convenience of wiring between the first battery 21 and the second battery 22, and the battery main box 1. By using the sixth connector 11, the other end of the first powered load and the other end of the second powered load can be conveniently connected to the battery main box 1 through wires, thereby improving convenience of wiring between the first powered load and the second powered load, and the battery main box 1.

In some embodiments of the present application, referring to FIG. 4, the first electrode first circuit 2 is provided with a third switch 13. The first electrode second circuit 3 is provided with a fourth switch 14. The second electrode circuit 4 is provided with a fifth switch 15.

By disposing the switches on the circuits, closing or opening of the circuits can be more conveniently controlled by controlling the switches to be on or off, so that the power supply to the circuits can be controlled more flexibly, and the batteries can be disconnected from other components in time when an abnormality occurs in the circuits, thereby protecting the batteries and the circuits together.

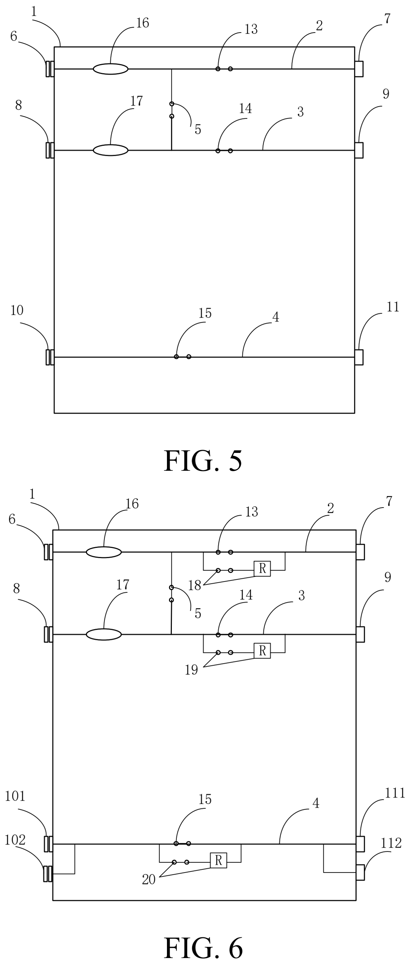

In some embodiments of the present application, referring to FIG. 5, the first electrode first circuit 2 is provided with a first current sensor 16 connected in series with the third switch 13, and the first electrode second circuit 3 is provided with a second current sensor 17 connected in series with the fourth switch 14. The first current sensor 16 is configured to detect a current of the first electrode first circuit 2, and the second current sensor 17 is configured to detect a current of the first electrode second circuit 3. The current sensor detects a size of a current flowing through the circuit. The detected current helps to determine whether a failure occurs in the circuit, and based on the current, some control processes can be adjusted, etc.

In some embodiments of the present application, referring to FIG. 6, the first electrode first circuit 2 is provided with a first precharge circuit 18 connected in parallel with the third switch 13. The first electrode second circuit 3 is provided with a second precharge circuit 19 connected in parallel with the fourth switch 14. The second electrode circuit 4 is provided with a third precharge circuit 20 connected in parallel with the fifth switch 15. The first precharge circuit 18 includes a precharge switch and a resistor R connected in series. The second precharge circuit 19 includes a precharge switch and a resistor R connected in series. The third precharge circuit 20 includes a precharge switch and a resistor R connected in series.

When the battery main box 1 controls the batteries to be connected to the circuit, first, the third switch 13 is turned off, the fourth switch 14 is turned off, the fifth switch 15 is turned off, the first precharge circuit 18 is closed, the second precharge circuit 19 is closed, and the third precharge circuit 20 is closed, which avoids damage to the circuit caused by an excessive current in the circuit at the beginning. After the overall circuit current is stable, the third switch 13, the fourth switch 14, and the fifth switch 15 are turned on, and the first precharge circuit 18, the second precharge circuit 19, and the third precharge circuit 20 are opened, thereby ensuring safety of the circuit. The first precharge circuit and the second precharge circuit can protect the first electrode first circuit and the third switch, thereby avoiding damage to the first electrode first circuit and the third switch caused by an excessive current when a loop is formed at the beginning. The third precharge circuit can protect the second electrode circuit and the fifth switch, thereby avoiding damage to the second electrode circuit and the fifth switch caused by an excessive current when a loop is formed at the beginning.

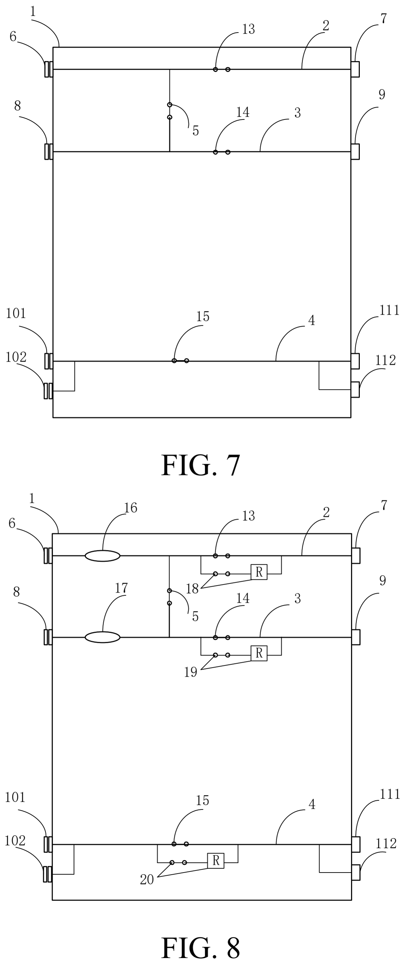

In some embodiments of the present application, referring to FIG. 7, the fifth connector 10 includes a first sub-connector 101 and a second sub-connector 102. The sixth connector 11 includes a third sub-connector 111 and a fourth sub-connector 112. The first sub-connector 101 and the second sub-connector 102 are both connected to a first end of the second electrode circuit 4. The third sub-connector 111 and the fourth sub-connector 112 are both connected to a second end of the second electrode circuit 4.

By using the first sub-connector 101 and the second sub-connector 102, the negative electrode of the first battery 21 and the negative electrode of the second battery 22 can be more conveniently connected to the battery main box 1, thereby facilitating wiring. If the negative electrode of the first battery 21 and the negative electrode of the second battery 22 are connected to the same connector, when this connector fails, both the first battery 21 and the second battery 22 will be affected. Through the connection to the first battery 21 and the second battery 22 by using the first sub-connector 101 and the second sub-connector 102, the probability that the negative electrode of the first battery 21 and the negative electrode of the second battery 22 are affected by the same connector is reduced, and the probability of failure is reduced.

By using the third sub-connector 111 and the fourth sub-connector 112, the wire of the first powered load and the wire of the second powered load can be more conveniently connected to the battery main box 1, thereby facilitating wiring. If the first powered load and the second powered load are connected to the same connector, when this connector fails, operations of both the first powered load and the second powered load will be affected. Through the connection to the first powered load and the second powered load by using the third sub-connector 111 and the fourth sub-connector 112, the probability that the two loads are affected by the same connector is reduced, and the probability of failure is reduced.

The foregoing descriptions of the embodiments are intended to emphasize differences between the embodiments. Mutual reference may be made to the same or similar parts. For brevity, details are not described herein again.

In some embodiments of the present application, referring to FIG. 8, a battery main box 1 includes a first electrode first circuit 2, a first electrode second circuit 3, and a second electrode circuit 4. The first electrode first circuit 2 is configured to be respectively connected to a first powered load and a first electrode of a first battery 21. The first electrode second circuit 3 is configured to be respectively connected to a second powered load and a first electrode of a second battery 22. The second electrode circuit 4 is configured to be respectively connected to the first powered load, the second powered load, a second electrode of the first battery 21, and a second electrode of the second battery 22. The first electrode is one of a positive electrode and a negative electrode, and the second electrode is the other of the positive electrode and the negative electrode than the first electrode. A first switch 5 is connected between a first end of the first electrode first circuit 2 and a first end of the first electrode second circuit 3.

The battery main box 1 further includes a first connector 6, a second connector 7, a third connector 8, a fourth connector 9, a fifth connector 10, and a sixth connector 11. The first electrode first circuit 2 is respectively connected to the first connector 6 and the second connector 7. The first connector 6 is configured to be connected to the first electrode of the first battery 21, and the second connector 7 is configured to be connected to the first powered load. The first electrode second circuit 3 is respectively connected to the third connector 8 and the fourth connector 9. The third connector 8 is configured to be connected to the first electrode of the second battery 22, and the fourth connector 9 is configured to be connected to the second powered load. The second electrode circuit 4 is respectively connected to the fifth connector 10 and the sixth connector 11. The fifth connector 10 is configured to be connected to the second electrode of the first battery 21 and the second electrode of the second battery 22, and the sixth connector 11 is configured to be connected to the first powered load and the second powered load.

The first electrode first circuit 2 is provided with a third switch 13. The first electrode second circuit 3 is provided with a fourth switch 14. The second electrode circuit 4 is provided with a fifth switch 15. The first electrode first circuit 2 is provided with a first current sensor 16 connected in series with the third switch 13, and the first electrode second circuit 3 is provided with a second current sensor 17 connected in series with the fourth switch 14. The first electrode first circuit 2 is provided with a first precharge circuit 18 connected in parallel with the third switch 13. The first electrode second circuit 3 is provided with a second precharge circuit 19 connected in parallel with the fourth switch 14. The second electrode circuit 4 is provided with a third precharge circuit 20 connected in parallel with the fifth switch 15.

The fifth connector 10 includes a first sub-connector 101 and a second sub-connector 102. The sixth connector 11 includes a third sub-connector 111 and a fourth sub-connector 112. The first sub-connector 101 and the second sub-connector 102 are both connected to a first end of the second electrode circuit 4. The third sub-connector 111 and the fourth sub-connector 112 are both connected to a second end of the second electrode circuit 4.

According to the battery main box 1, by controlling the first switch 5 to be on or off, the circuit structure in which the batteries are located can be changed, so that the circuit structure can be flexibly changed to implement more functions.

The foregoing descriptions of the embodiments are intended to emphasize differences between the embodiments. Mutual reference may be made to the same or similar parts. For brevity, details are not described herein again.

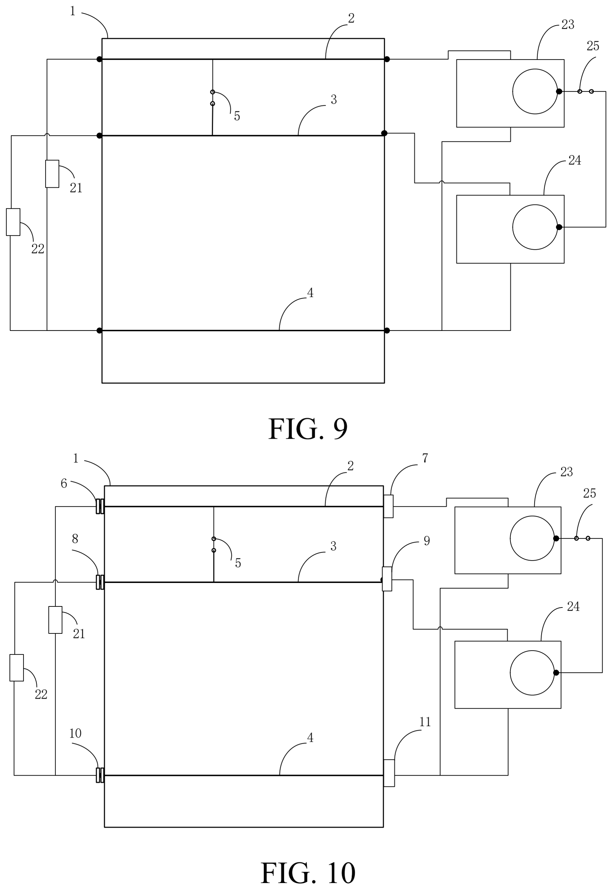

Some embodiments of the present application provide a charge-discharge circuit. Referring to FIG. 9, the charge-discharge circuit includes a power supply module, a first driving assembly 23, a second driving assembly 24, and a sixth switch 25. The power supply module includes a first battery 21, a second battery 22, and the battery main box 1 according to any of the above embodiments. The first driving assembly 23 is respectively connected to a second end of a first electrode first circuit 2 and a second end of a second electrode circuit 4. The second driving assembly 24 is respectively connected to a second end of a first electrode second circuit 3 and the second end of the second electrode circuit 4. One end of the sixth switch 25 is connected to the first driving assembly 23, and the other end of the sixth switch 25 is connected to the second driving assembly 24. The charge-discharge circuit according to the embodiments of the present application can achieve beneficial technical effects that the battery main box 1 of any of the above embodiments can achieve, and the charge-discharge circuit can be flexibly changed to form different circuit loops, thereby implementing different functions.

Specifically, in some examples, one end of the sixth switch 25 is connected to a neutral point of a motor in the first driving assembly 23, and the other end of the sixth switch 25 is connected to a neutral point of a motor in the second driving assembly 24. A first electrode of the first battery 21 is connected to a first end of the first electrode first circuit 2, and a first electrode of the second battery 22 is connected to a first end of the first electrode second circuit 3. A second electrode of the first battery 21 and a second electrode of the second battery 22 are both connected to a first end of the second electrode circuit 4. The first electrode is one of a positive electrode and a negative electrode, and the second electrode is the other of the positive electrode and the negative electrode than the first electrode.

The switching elements in the charge-discharge circuit are automatically controlled, and the switching elements are turned on or off to flexibly switch among different circuit loops, thereby implementing more functions, improving flexibility and fault tolerance of control of the charge-discharge circuit, and increasing functions that can be implemented by the whole circuit architecture.

Referring to FIG. 10, in some embodiments of the present application, the first driving assembly 23 is respectively connected to a second connector 7 and a sixth connector 11. The second driving assembly 24 is respectively connected to a fourth connector 9 and the sixth connector 11. The first electrode of the first battery 21 is connected to the first connector 6. The second electrode of the first battery 21 is connected to the fifth connector 10. The first electrode of the second battery 22 is connected to the third connector 8. The second electrode of the second battery 22 is connected to the fifth connector 10.

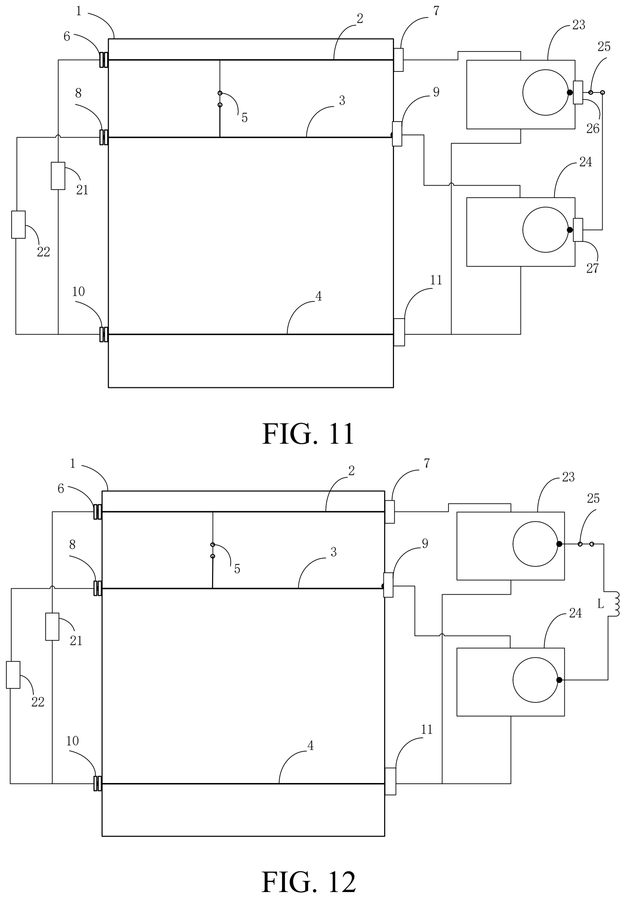

In some embodiments of the present application, referring to FIG. 11, a first neutral terminal 26 is disposed at the neutral point of the motor in the first driving assembly 23, and a second neutral terminal 27 is disposed at the neutral point of the motor in the second driving assembly 24. One end of the sixth switch 25 is connected to the first neutral terminal 26 through a high-voltage wire harness, and the other end of the sixth switch 25 is connected to the second neutral terminal 27 through a high-voltage wire harness.

In this way, the sixth switch 25 can be conveniently connected between the neutral point of the motor in the first driving assembly 23 and the neutral point of the motor in the second driving assembly 24 through a wire. During connection, there is no need to disassemble a housing of the motor in the first driving assembly 23 and a housing of the motor in the second driving assembly 24 to find locations of the neutral points, thereby improving connection convenience and connection efficiency.

In some embodiments of the present application, referring to FIG. 12, the charge-discharge circuit further includes an energy storage element. The energy storage element is connected to a circuit between the neutral point of the motor in the first driving assembly 23 and the neutral point of the motor in the second driving assembly 24, and the energy storage element is connected in series with the sixth switch 25. The energy storage element includes at least one inductor L. The at least one inductor L and the sixth switch 25 are connected in series to the circuit between the neutral point of a first motor and the neutral point of a second motor.

By adding the energy storage element, in a scenario of heating the batteries, the energy storage element stores electric energy together with windings in the motor in the first driving assembly and in the motor in the second driving assembly, which can increase stored energy of the whole circuit system, and then, the stored electric energy is charged back to the batteries. Charge and discharge are carried out alternately to heat the batteries. By using the energy storage element, a size of an alternating current generated in the whole loop can be increased, heat generation from internal resistance of the batteries per unit time is increased, and a heating rate of the batteries is increased.

The foregoing descriptions of the embodiments are intended to emphasize differences between the embodiments. Mutual reference may be made to the same or similar parts. For brevity, details are not described herein again.

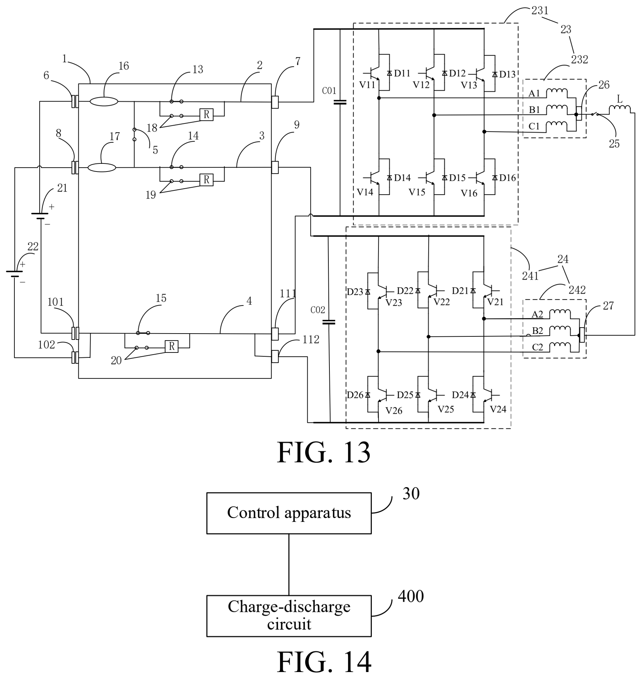

In some embodiments of the present application, referring to FIG. 13, the charge-discharge circuit includes a first battery 21, a second battery 22, a first driving assembly 23, a second driving assembly 24, and a battery main box 1.

The battery main box 1 includes a first electrode first circuit 2, a first electrode second circuit 3, and a second electrode circuit 4. The first electrode first circuit 2 is configured to be respectively connected to a first powered load and a first electrode of the first battery 21. The first electrode second circuit 3 is configured to be respectively connected to a second powered load and a first electrode of the second battery 22. The second electrode circuit 4 is configured to be respectively connected to the first powered load, the second powered load, a second electrode of the first battery 21, and a second electrode of the second battery 22. The first electrode is a positive electrode, and the second electrode is a negative electrode. A first switch 5 is connected between a first end of the first electrode first circuit 2 and a first end of the first electrode second circuit 3.

The battery main box 1 further includes a first connector 6, a second connector 7, a third connector 8, a fourth connector 9, a fifth connector 10, and a sixth connector 11. The first electrode first circuit 2 is respectively connected to the first connector 6 and the second connector 7. The first connector 6 is configured to be connected to the first electrode of the first battery 21, and the second connector 7 is configured to be connected to the first powered load. The first electrode second circuit 3 is respectively connected to the third connector 8 and the fourth connector 9. The third connector 8 is configured to be connected to the first electrode of the second battery 22, and the fourth connector 9 is configured to be connected to the second powered load. The second electrode circuit 4 is respectively connected to the fifth connector 10 and the sixth connector 11. The fifth connector 10 is configured to be connected to the second electrode of the first battery 21 and the second electrode of the second battery 22, and the sixth connector 11 is configured to be connected to the first powered load and the second powered load.

The first electrode first circuit 2 is provided with a third switch 13. The first electrode second circuit 3 is provided with a fourth switch 14. The second electrode circuit 4 is provided with a fifth switch 15. The first electrode first circuit 2 is provided with a first current sensor 16 connected in series with the third switch 13, and the first electrode second circuit 3 is provided with a second current sensor 17 connected in series with the fourth switch 14. The first electrode first circuit 2 is provided with a first precharge circuit 18 connected in parallel with the third switch 13. The first electrode second circuit 3 is provided with a second precharge circuit 19 connected in parallel with the fourth switch 14. The second electrode circuit 4 is provided with a third precharge circuit 20 connected in parallel with the fifth switch 15.

The fifth connector 10 includes a first sub-connector 101 and a second sub-connector 102. The first sub-connector 101 and the second sub-connector 102 are both connected to a first end of the second electrode circuit 4. By using the first sub-connector 101 and the second sub-connector 102, the negative electrode of the first battery 21 and the negative electrode of the second battery 22 can be more conveniently connected to the battery main box 1, thereby facilitating wiring. The sixth connector 11 includes a third sub-connector 111 and a fourth sub-connector 112. The third sub-connector 111 and the fourth sub-connector 112 are both connected to a second end of the second electrode circuit 4. By using the third sub-connector 111 and the fourth sub-connector 112, the wire of the first powered load and the wire of the second powered load can be more conveniently and flexibly connected to the battery main box 1, thereby facilitating wiring.

The first driving assembly 23 includes a first motor controller 231 and a first motor 232 connected to the first motor controller 231. Upper bridge arms of bridge arms of the first motor controller 231 are connected to a same wire, and the wire may serve as the first end of the first driving assembly 23. Lower bridge arms of the bridge arms of the first motor controller 231 are connected to a same wire, and the wire may serve as the second end of the first driving assembly 23. The first end and the second end of the second driving assembly 24 have the same structure as the first end and the second end of the first driving assembly 23, and details are not described herein again.

The first motor controller 231 has 3 bridge arms, and the first motor 232 has 3 windings. The second motor controller 241 included in the second driving assembly 24 has 3 bridge arms, and the second motor 242 has 3 windings. In an actual application, the motors may be motors having any number of phases, and correspondingly, a number of bridge arms in the motor controller may also be another number.

The battery main box 1 is configured to control the first battery 21 and the second battery 22 to be connected to the first driving assembly 23 and the second driving assembly 24. The battery main box 1 may further be configured to detect a size of a current flowing through the first electrode first circuit 2 or the first electrode second circuit 3, or detect a size of a voltage across the positive and negative electrodes of the first battery 21 or the second battery 22.

Specifically, a first end of the first motor controller 231 in the first driving assembly 23 is connected to the third connector 8, and a second end of the first motor controller 231 is connected to the third sub-connector 111. The upper bridge arms of the bridge arms in the first motor controller 231 are connected to the same wire, and the upper bridge arms are connected together and connected to the third connector 8. The lower bridge arms of the bridge arms are connected to the same wire, and the upper bridge arms are connected together and connected to the third sub-connector 111.

A first end of the second motor controller 241 in the second driving assembly 24 is connected to the fourth connector 9, and a second end of the second motor controller 241 is connected to the fourth sub-connector 112. Upper bridge arms of bridge arms in the second motor controller 241 are connected to the same wire, and the upper bridge arms are connected together and connected to the fourth connector 9. Lower bridge arms of the bridge arms are connected to the same wire, and the upper bridge arms are connected together and connected to the fourth sub-connector 112.

A first neutral terminal 26 is disposed at the neutral point of the first motor 232, and a second neutral terminal 27 is disposed at the neutral point of the motor in the second motor 242. One end of the sixth switch 25 is connected to the first neutral terminal 26 through a high-voltage wire harness, and the other end of the sixth switch 25 is connected to the second neutral terminal 27 through a high-voltage wire harness.

In this way, the sixth switch 25 can be conveniently connected between the neutral point of the first motor 232 and the neutral point of the second motor 242 through a wire. During connection, there is no need to disassemble a housing of the first motor 232 and a housing of the second motor 242 to find locations of the neutral points, thereby improving connection convenience and connection efficiency.

The charge-discharge circuit further includes an energy storage element. The energy storage element includes at least one inductor L. The at least one inductor L and the sixth switch 25 are connected in series to the circuit between the neutral point of the first motor 232 and the neutral point of the second motor 242. By adding the energy storage element, in a scenario of heating the batteries, the energy storage element stores electric energy together with the windings in the first motor and the second motor, which can increase stored energy of the whole circuit system, and then, the stored electric energy is charged back to the batteries. Charge and discharge are carried out alternately to heat the batteries. By using the energy storage element, a size of an alternating current generated in the whole loop can be increased, heat generation from internal resistance of the batteries per unit time is increased, and a heating rate of the batteries is increased. The at least one inductor is connected in series between the neutral points of the first motor and the second motor. By using the inductor connected in series, a total inductance of the inductor in the whole circuit system in the scenario of heating the batteries can be increased, which helps to increase the size of the alternating current generated in the charge-discharge loop and improve heating efficiency of the batteries.

The first motor controller 231 has a capacitor C01 connected in parallel with the bridge arms, and the second motor controller 241 has a capacitor C02 connected in parallel with the bridge arms.

By controlling the first switch 5 to be on or off, the circuit structure in which the batteries are located can be changed, so that the circuit structure can be flexibly changed to implement more functions.

For example, by controlling the first switch 5 to be on, the sixth switch 25 to be on, all the upper bridge arms of the first motor controller 231 to be on, all the lower bridge arms of the first motor controller 231 to be off, all the lower bridge arms of the second motor controller 241 to be on, and all the upper bridge arms of the second motor controller 241 to be off, two loops can be formed. In one of the loops, the current sequentially flows through the positive electrode of the first battery 21, the first electrode first circuit 2, the first motor controller 231, the first motor 232, the inductor L, the second motor 242, the second motor controller 241, the fourth sub-connector 112, the second electrode circuit 4, the first sub-connector 101, and the negative electrode of the first battery 21. In the other loop, the current sequentially flows through the positive electrode of the second battery 22, the first switch 5, the first electrode first circuit 2, the first motor controller 231, the first motor 232, the inductor L, the second motor 242, the second motor controller 241, the fourth sub-connector 112, the second electrode circuit 4, the second sub-connector 102, and the negative electrode of the second battery 22. In this way, the first battery 21 and the second battery 22 can be self-heated at the same time.

For another example, by controlling the first switch 5 to be off, the sixth switch 25 to be on, all the upper bridge arms of the first motor controller 231 to be off, all the lower bridge arms of the first motor controller 231 to be on, all the lower bridge arms of the second motor controller 241 to be off, and all the upper bridge arms of the second motor controller 241 to be on, a self-heating loop of the second battery 22 can be formed. The current sequentially flows through the positive electrode of the second battery 22, the first electrode second circuit 3, the second motor controller 241, the second motor 242, the inductor L, the first motor 232, the first motor controller 231, the third sub-connector 111, the second electrode circuit 4, the second sub-connector 102, and the negative electrode of the second battery 22, so that the self-heating loop of the second battery 22 is formed, thereby implementing self-heating of the second battery 22.

In addition, the switches of the whole circuit may also be controlled according to the requirement of the actual application to implement different circuits, thereby greatly improving flexibility of the circuit structure.

The foregoing descriptions of the embodiments are intended to emphasize differences between the embodiments. Mutual reference may be made to the same or similar parts. For brevity, details are not described herein again.

Another embodiment of the present application provides a powered device. Referring to FIG. 14, the powered device includes a control apparatus 30 and the charge-discharge circuit 400 provided in any of the above embodiments. The control apparatus 30 is in communication connection with switching elements in the charge-discharge circuit 400, and the switch elements include at least a first switch 5 and a sixth switch 25.

The switching elements may further include switches disposed in the battery main box 1 or switches in bridge arms of the first motor controller 231 and the second motor controller 241. The control apparatus 30 may be a motor controller, a whole vehicle controller, a domain controller, or the like. The powered device may be any device including a single battery and dual motors, such as an electric vehicle, an electric ship, or an aircraft.

The switching elements in the charge-discharge circuit 400 are automatically controlled by the control apparatus 30, and the switching elements are turned on or off to flexibly switch among different circuit loops, thereby implementing more functions, improving flexibility and fault tolerance of control of the charge-discharge circuit, increasing functions that can be implemented by the whole circuit architecture, and improving performance of the powered device.

The foregoing descriptions of the embodiments are intended to emphasize differences between the embodiments. Mutual reference may be made to the same or similar parts. For brevity, details are not described herein again.

It should be noted that the foregoing embodiments only describe implementations of the present application specifically and in detail, but cannot be construed as a limitation to the patent scope of the present application. It should be noted that for a person of ordinary skill in the art, several transformations and improvements can be made without departing from the idea of the present application. These transformations and improvements belong to the protection scope of the present application. Therefore, the protection scope of the present application shall be subject to the appended claims.

## Claims

1. A battery main box, comprising two first electrode circuits and one second electrode circuit, wherein a switch is connected between the two first electrode circuits; the two first electrode circuits are respectively a first electrode first circuit and a first electrode second circuit; the first electrode first circuit is configured to be respectively connected to a first powered load and a first electrode of a first battery; the first electrode second circuit is configured to be respectively connected to a second powered load and a first electrode of a second battery; the second electrode circuit is configured to be respectively connected to the first powered load, the second powered load, a second electrode of the first battery, and a second electrode of the second battery; and the first electrode is one of a positive electrode and a negative electrode, and the second electrode is the other of the positive electrode and the negative electrode than the first electrode; and
a first switch is connected between the first electrode first circuit and the first electrode second circuit.

2. The battery main box according to claim 1, wherein the battery main box further comprises a first connector and a second connector; and
the first electrode first circuit is respectively connected to the first connector and the second connector, the first connector is configured to be connected to the first electrode of the first battery, and the second connector is configured to be connected to the first powered load.

3. The battery main box according to any one of claims 1 to 2, wherein the battery main box further comprises a third connector and a fourth connector; and
the first electrode second circuit is respectively connected to the third connector and the fourth connector, the third connector is configured to be connected to the first electrode of the second battery, and the fourth connector is configured to be connected to the second powered load.

4. The battery main box according to any one of claims 1 to 2, wherein the battery main box further comprises a fifth connector and a sixth connector; and
the second electrode circuit is respectively connected to the fifth connector and the sixth connector, the fifth connector is configured to be connected to the second electrode of the first battery and the second electrode of the second battery, and the sixth connector is configured to be connected to the first powered load and the second powered load.

5. The battery main box according to claim 4, wherein the first switch is connected between a first end of the first electrode first circuit and a first end of the first electrode second circuit; and the fifth connector comprises a first sub-connector and a second sub-connector;
the sixth connector comprises a third sub-connector and a fourth sub-connector;
the first sub-connector and the second sub-connector are both connected to a first end of the second electrode circuit; and
the third sub-connector and the fourth sub-connector are both connected to a second end of the second electrode circuit.

6. The battery main box according to any one of claims 1 to 2, wherein the first electrode first circuit is provided with a third switch; the first electrode second circuit is provided with a fourth switch; and the second electrode circuit is provided with a fifth switch.

7. The battery main box according to claim 6, wherein the first electrode first circuit is provided with a first current sensor connected in series with the third switch.

8. The battery main box according to any one of claims 6 to 7, wherein the first electrode second circuit is provided with a second current sensor connected in series with the fourth switch.

9. The battery main box according to any one of claims 6 to 8, wherein the first electrode first circuit is provided with a first precharge circuit connected in parallel with the third switch, and the first electrode second circuit is provided with a second precharge circuit connected in parallel with the fourth switch.

10. The battery main box according to any one of claims 6 to 9, wherein the second electrode circuit is provided with a third precharge circuit connected in parallel with the fifth switch.

11. A charge-discharge circuit, comprising a power supply module, a first driving assembly, a second driving assembly, and a sixth switch, wherein the power supply module comprises a first battery, a second battery, and the battery main box according to any one of claims 1 to 10; the two first electrode circuits are respectively the first electrode first circuit and the first electrode second circuit;
the first driving assembly is respectively connected to a second end of the first electrode first circuit and the second end of the second electrode circuit; and the second driving assembly is respectively connected to a second end of the first electrode second circuit and the second end of the second electrode circuit; and
one end of the sixth switch is connected to the first driving assembly, and the other end of the sixth switch is connected to the second driving assembly.

12. The charge-discharge circuit according to claim 11, wherein one end of the sixth switch is connected to a neutral point of a motor in the first driving assembly, and the other end of the sixth switch is connected to a neutral point of a motor in the second driving assembly.

13. The charge-discharge circuit according to any one of claims 11 to 12, wherein the battery main box further comprises the first connector and the second connector; the first electrode first circuit is respectively connected to the first connector and the second connector, the first connector is configured to be connected to a first electrode of the first battery, and the second connector is configured to be connected to the first powered load; the battery main box further comprises the third connector and the fourth connector; the first electrode second circuit is respectively connected to the third connector and the fourth connector, the third connector is configured to be connected to a first electrode of the second battery, and the fourth connector is configured to be connected to the second powered load; the battery main box further comprises the fifth connector and the sixth connector; the second electrode circuit is respectively connected to the fifth connector and the sixth connector, the fifth connector is configured to be connected to a second electrode of the first battery and a second electrode of the second battery, and the sixth connector is configured to be connected to the first powered load and the second powered load; the first driving assembly is respectively connected to the second connector and the sixth connector; and the second driving assembly is respectively connected to the fourth connector and the sixth connector.

14. The charge-discharge circuit according to any one of claims 11 to 13, wherein a first neutral terminal is disposed at the neutral point of the motor in the first driving assembly, and a second neutral terminal is disposed at the neutral point of the motor in the second driving assembly; and
one end of the sixth switch is connected to the first neutral terminal through a high-voltage wire harness, and the other end of the sixth switch is connected to the second neutral terminal through a high-voltage wire harness.

15. The charge-discharge circuit according to any one of claims 11 to 14, wherein the charge-discharge circuit further comprises an energy storage element; and
the energy storage element is connected to a circuit between the neutral point of the motor in the first driving assembly and the neutral point of the motor in the second driving assembly, and the energy storage element is connected in series with the sixth switch.

16. The charge-discharge circuit according to claim 15, wherein the energy storage element comprises at least one inductor; and
the at least one inductor and the sixth switch are connected in series to the circuit between the neutral point of the motor in the first driving assembly and the neutral point of the motor in the second driving assembly.

17. A powered device, comprising a control apparatus and the charge-discharge circuit according to any one of claims 11 to 16, wherein
the control apparatus is in communication connection with switching elements in the charge-discharge circuit, and the switch elements comprise at least the first switch and the sixth switch.
